# EUROPEAN PATENT SPECIFICATION

(11) **EP 2 166 339 B1**
(45) Date of publication and mention of the grant of the patent: **27.06.2012**
(21) Application number: 09164028.4
(22) Date of filing: 29.06.2009
(51) Int. Cl.: G01N 21/00, B23Q 17/00, B27G 1/00

(54) **Method for checking the positioning of a wooden element along a processing line and relative applications**
Methode zur Überprüfung der Position eines Holz Elementes zusammen mit einer Fertigungslinie und entsprechenden Anwendungen
Methode de vérification de la position d'un élément de bois le long d'une ligne de production et applications correspondantes

(30) Priority: 18.09.2008 IT VR20080102
(43) Date of publication of application: 24.03.2010
(73) Proprietor: MICROTEC S.r.l., 39042 Bressanone (IT)
(72) Inventor: Giudiceandrea, Federico, 39042, Bressanone (IT)
(74) Representative: Ponchiroli, Simone

(56) References cited:
- WO-A-85/00657
- WO-A-2005/010628
- US-A- 2 175 654
- US-A- 3 741 853

## Description

The present invention relates to a method for checking the positioning of a wooden element along a processing line according to the preamble of claim 1.

Such a method is known from document WO 2005 010628 A1.

In particular, the present invention relates to application of the method relative to finishing operations which are usually carried out on laminated wooden beams. Therefore, hereinafter, for simplicity reference is often made to the finishing of laminated beams, although it shall be understood that the present invention may apply to all cases in which there are similar problems regarding the need to identify the position of a wooden element along a processing line.

Laminated beams are wooden elements comprising two or more layers of planks glued together, which may be used either as load-bearing beams in construction, or for making furniture.

One of the problems which emerge, and which must be avoided with laminated beams, is the presence of surface defects, such as knots which become detached, resin pockets which are exposed, etc.

Since avoiding the presence of such defects is practically impossible, at the end of the process each laminated beam is subjected to a finishing treatment in which the defect is removed (by routing or boring) and is substituted with a wooden block which is free of defects and is inserted and glued in the hole obtained in this way. Subsequent sanding of the beam surface makes said work almost invisible.

At present, the removal of defects and insertion of blocks are carried out exclusively by hand. Along the processing line there are two separate stations, a station in which the surface of the beams is examined by operators skilled in finding defects and in which the defects to be corrected are identified, and an actual processing station in which other skilled workers work on the defects previously indicated. However, this prior art technology has significant disadvantages in terms of productivity and operating costs.

Like all manual work, that described above involves relatively lengthy processing times and needs a large number of skilled workers.

Therefore, the sector feels the need to automate such operations, and in particular to automate operations for removing defects and inserting blocks. However, to do that would necessitate extremely precise knowledge, in the processing station, of the position of the defects. Corrective work usually affects areas of the surface of the beams whose diameter is at most a few centimetres.

However, such a requirement clashes with the typical features of prior art plants. In prior art plants, the laminated beams are moved from the station in which the defects are identified (and in which the position of the defects on the beam may be very precisely identified) by conveyors, such as roller conveyors, on which the beams are rested.

But, however much the movement of the rollers is controlled, it is not possible to identify with certainty, from one moment to the next, the position of the beam relative to the conveyors, since, partly due to the high level of inertia of the beams (which may even be twenty metres long), there are continuously small slipping movements between the beams and the conveyors.

It should be noticed that even errors such as one per thousand in identifying the position of the beams (errors which are already extremely small for the sector examined) are intolerable in this type of processing, since they would involve errors identifying the position of the defect of one centimetre for every ten metres of beam length (and therefore, errors of a size comparable to that of the processing to be carried out).

In this situation, the technical purpose which forms the basis of this invention is to provide a method for checking the positioning of a wooden element along a processing line which overcomes the above-mentioned disadvantages.

In particular, the technical purpose of this invention is to provide a method for checking the positioning of a wooden element along a processing line which allows automation of the processes for localised processing the wooden elements, such as finishing processes for laminated beams and similar products.

The technical purpose specified and the aims indicated are substantially achieved by a method for checking the positioning of a wooden element along a processing line as described in the appended claims. Further features and the advantages of the present invention are more apparent from the detailed description of several preferred, non-limiting embodiments of a method for checking the positioning of a wooden element along a processing line described below with reference to the accompanying drawings, in which:
- Figure 1 is a schematic axonometric view of a wooden element consisting of a laminated beam;
- Figure 2 is a schematic view of a processing line for a wooden element;
- Figure 3 is a schematic view of a first station of the processing line of Figure 3;
- Figure 4 is a schematic view of the situation relating to a first operating step of the method according to the present invention;
- Figure 5 is a schematic view of the situation relating to a second operating step of the method according to the present invention;
- Figures 6 and 7 show two further steps of the method according to the present invention; and
- Figures 8 to 10 show several operating steps of a method for finishing wooden elements.

With reference to the accompanying drawings, the numeral 1 denotes as a whole a wooden element to which the position checking method according to the present invention may be applied.

In particular, in the accompanying drawings the wooden element 1 is a laminated beam. It is therefore a parallelepiped with two flat base faces 2 which, during feed along the processing line are substantially perpendicular to the feed direction, and four lateral faces 3 which, during feed along the processing line 4 are substantially parallel with the feed direction 5.

In general, the checking method allows checking of the position of a wooden element 1 after movement between a first station 6 and a second station 7 of the processing line 4, so that the position in the second station 7 is known with a certain predetermined degree of precision.

The method comprises, first, a first operating step of identifying, at a first detection station 6, the presence of at least one distinctive element 8 on the surface of the wooden element 1.

Depending on requirements, said operating step may be carried out in many different ways. In particular, it may be carried out by taking as the distinctive element 8 either a surface defect of the wooden element 1 (such as a knot, an exposed resin pocket, a lack of material, etc., that is to say, in general, a uneven feature in the outer appearance of the surface of the wooden element 1) or a reference mark previously applied (glued, fastened, stamped, etc.) to the wooden element 1, such as a label, a bar code, etc.

Relative to the distinctive element 8, the checking method involves performing a first scan of the surface of the wooden element 1 at least at a first zone 9 of the latter comprising the distinctive element 8. In that way, at least a first image 10 is obtained, corresponding to an area of the surface in which the distinctive element 8 is located. In general, said scan of the first zone 9 is a two-dimensional scan.

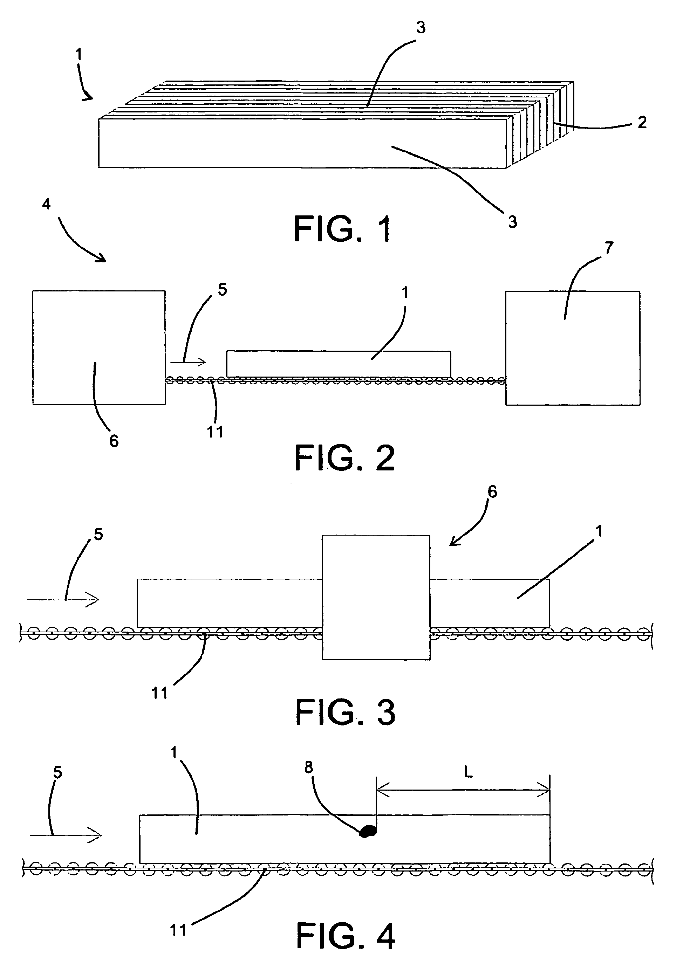

Moreover, the first scanning step preferably involves scanning an entire face 2, 3 of the wooden element 1 or the entire surface of the wooden element 1 (at least the lateral one as shown in Figure 2). Depending on requirements, the distinctive element identification step may be carried out either before or after the first scanning step. In particular, when the first scanning step only involves a first zone 9 having small dimensions, it must be performed as a consequence of the step of identifying the distinctive element 8, since the latter must be within the zone scanned.

In contrast, when the first scanning step involves the entire lateral surface of the wooden element 1, the step of identifying the defect may be carried out subsequently, even based on the first image 10 detected.

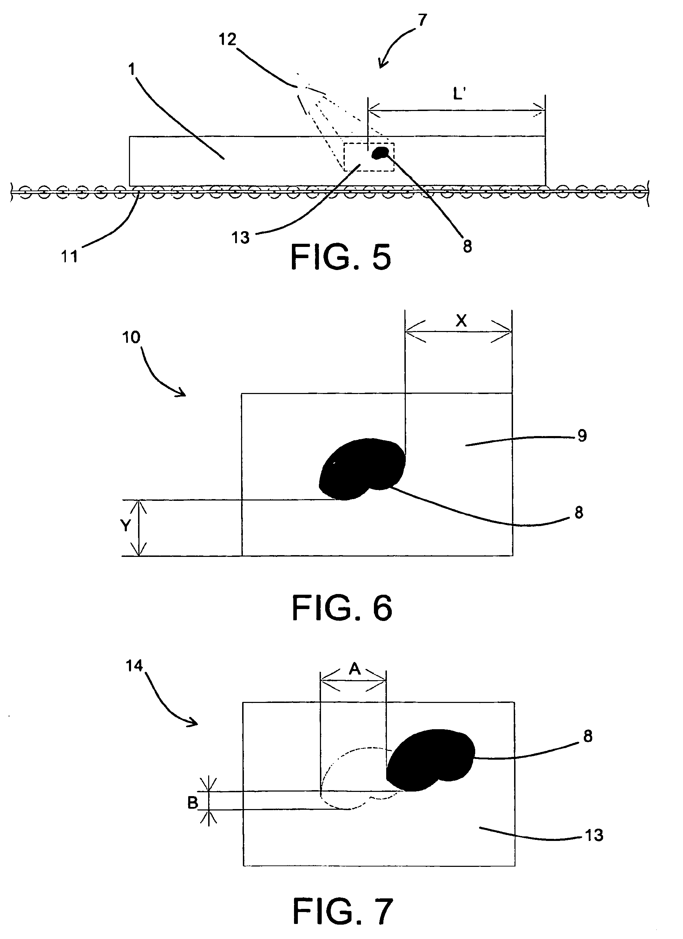

Moreover, advantageously, the first image 10 is a digital image. An example of a first image 10 corresponding to a limited first zone 9 is shown in Figure 6.

At this point the method according to the present invention involves a step of identifying, with a predetermined first degree of precision, the position of the distinctive element 8 on the surface of the wooden element 1.

Said step is schematically illustrated in Figure 4 where the position of the distinctive element 8 is identified as the axial distance L between the distinctive element 8 and one end of the wooden element 1.

Similarly, in Figure 6 the position of the distinctive element 8 is identified as its distance (X, Y) from two references whose positions on the surface are known, that is to say, the edges of the first image 10. The distance between said edges and both the end and the base of the wooden element 1 is known (in the case of laminated beams, from the edges of the face on which the defect is located). Therefore, it should be noticed that, in general, the step of identifying the position of the distinctive element 8 is carried out at least implicitly based on the result of the first scanning step.

At the end of the distinctive element identification step described, the position of the distinctive element 8 on the surface of the wooden element 1 is known with a predetermined first degree of precision (for example, precise to the millimetre, to the tenth of a millimetre, etc.).

At this point, the wooden element 1 can be fed along the processing line 4. During feed, the method according to the present invention involves the position of the wooden element 1 being checked with a predetermined second degree of precision which is lower than the first degree of precision first used. For example, the second degree of precision may be lower than the first degree of precision by at least one order of magnitude. Therefore, if in the identification carried out with the first degree of precision the error is less than one millimetre, in the identification carried out with the second degree of precision the error is less than one centimetre.

It should be noticed that, in practice, a check of this type may be carried out using one (or more) photocells which detect the passage of the wooden element 1 at their location. Advantageously, said photocell may be positioned at a reduced distance from the second, processing station 7 so that the error in identifying the position of the wooden element 1 depends exclusively on what may happen to the wooden element 1 between the photocell and the processing station 7 (such as, in general, slipping movements relative to the feed devices).

It should also be noticed that the wooden element 1 feed step may be carried out using one or more conveyors 11 (for example roller conveyors like those in the accompanying drawings) on which the wooden element 1 is rested.

When the wooden element 1 reaches the second, processing station 7, the method involves, first, identification of the theoretical point where the distinctive element 8 should be. Said identification of the theoretical point is carried out based on the check carried out during wooden element 1 feed, which, as indicated, was carried out with the above-mentioned predetermined second degree of precision. Therefore, the theoretical point is identified thanks to the information previously obtained in the detection station 6 regarding the position of the defect (distance L). However, in reality, due to the second degree of precision, the point actually identified as the theoretical point will have a different position (distance L' in Figure 5).

At this point, a second scan is performed (usually two-dimensional using a scanner 12) of the surface of the wooden element 1 at a limited second zone 13 of the surface comprising the theoretical point previously found where the distinctive element 8 should be located. At the end of said scan, a second image 14 is available, preferably digital, including the distinctive element 8.

Having two images 10, 14 available, both comprising the distinctive element 8, it is therefore possible to compare the two images 10, 14 to identify the exact point where the distinctive element 8 is located and, consequently, at least implicitly, the position of the wooden element 1.

As seen in Figure 7, which shows the second image 14, given the theoretical position of the distinctive element 8 (shown by the dashed outline), it is possible to identify the movement necessary to place the distinctive element 8 reproduced in the second image 14 over the distinctive element 8 reproduced in the first image 10. In particular, Figure 7 shows the components A and B of said movement, calculated along two axes which are at a right angle to each other. However, in many applications, as in that of finishing laminated beams (returned to below) the movement to be calculated is only in the axial direction.

Therefore, in the preferred embodiment, the movement is identified as a translation in the plane formed by the first and second images 10, 14.

When the above-mentioned movement is known, it is possible to identify the position of the wooden element 1 in space both explicitly and implicitly. This latter case occurs when what is of interest is not so much the absolute position of the wooden element 1 in space, but rather the position of a particular zone of the wooden element (normally that marked by the distinctive element 8) on which processing is required.

Consequently, said identification of the position of the wooden element 1 is carried out, implicitly or explicitly, by correcting the theoretical position identified with the second degree of precision based on the movement value calculated in the comparison step.

In the preferred embodiment the comparison step is carried out by comparing two numeric matrices corresponding respectively to the first image and the second image 14. Each digital image can be interpreted as one or more numeric matrices (each corresponding to a pixel of the image) each element of which may be representative, for example, of the intensity of a certain chromatic shade (grey, red, green, blue, etc.).

In particular, since the first and second images 10, 14 have only one superposable part, the comparison step may also be carried out by comparing two or more numeric submatrices of the numeric matrices corresponding respectively to the first image and the second image 14.

In all cases, the actual comparison may be carried out with suitable algebraic methods such as calculation of the covariance matrix of the two matrices examined.

Finally, it should be noticed that, since the first image 10 and the second image 14 are detected with lighting conditions which are inevitably different, it is always appropriate to establish a predetermined margin of error below which the correspondence between the distinctive element 8 shown in the first image 10 and that shown in the second image 14 may be considered to have been found.

The method for checking the position of a wooden element 1 in a processing line 4 described above is advantageously applied in all processes in which localised processing is required on wooden elements 1, and in which the zone to be processed 15 is decided in a station of the processing line 4 which is different to that in which the processing is carried out.

All of said methods involve, in general, a first operating step in which a zone to be processed 15 is identified on a wooden element 1, said operating step being carried out at the detection station 6.

Then the wooden element 1 is moved to a processing station 7 where the new position adopted by the zone to be processed 15 must be identified. Only at that point can localised processing be performed on the zone to be processed 15.

Therefore, in all such methods, the method for checking the position of the wooden element 1 described above is advantageously applied for identifying the position of the zone to be processed 15 when the wooden element 1 is at the processing station 7.

For a particularly advantageous application of the method, the step of identifying the distinctive element 8 may be carried out relative to a distinctive element 8 directly associated with the zone to be processed 15, or even part of it (such as a defect). Thanks to the use of said method, the step of processing the wooden element 1 can be automated. However, one of the preferred sectors for application of the present invention is that of surface finishing beams, and in particular laminated beams.

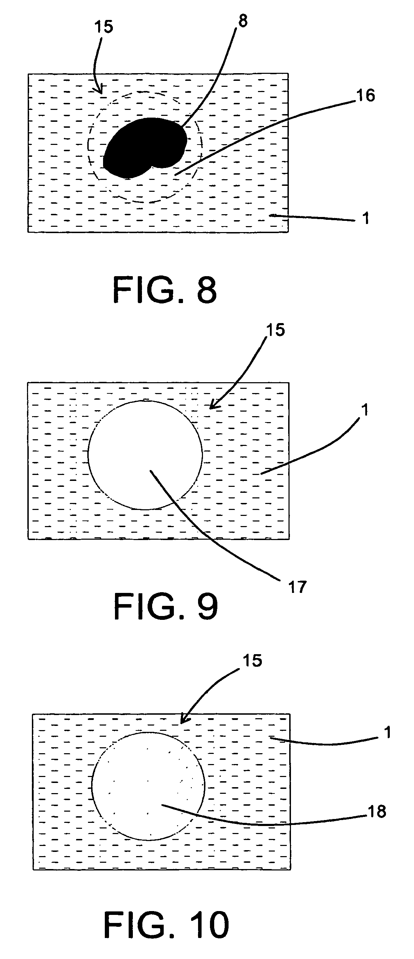

In that sector, it is possible to take as the distinctive reference element 8 directly one of the defects to be removed from the wooden element 1, so that the final step of identifying the position of the wooden element 1 in the processing station 7 can also be carried out only implicitly, since once the actual position of the detect relative to the theoretical point where it should be has been identified, it is possible to immediately perform the processing on the wooden element 1, removing (for example by boring or routing) a part 16 of the wooden element 1 which comprises the defect (Figure 8), effectively removing the defect and leaving a recess 17 (Figure 9), then substituting the removed part 16 with a block 18 having the same dimensions and which is free of defects (Figure 10).

When there are two or more zones to be processed 15 on the same wooden element 1, it is possible either to use a single distinctive element 8 to explicitly identify the position of the wooden element 1 in the processing station 7, and use said information for all of the zones to be processed 15, or to apply the checking method for each zone to be processed 15, identifying a specific distinctive element 8 (advantageously the defect to be removed) for each zone. In this latter case, the position can only be identified implicitly.

It should noticed that the operations linked to the second scan and to the actual processing steps may all be carried out using one or more industrial robots of the known type equipped with suitable tools.

The present invention brings important advantages. Thanks to the method perfected in the present invention, it is possible to precisely identify the position of wooden elements at a processing station of a processing line, in a simple and reliable way, based on information detected in a previous detection station.

The method may therefore also be easily implemented relative to existing lines without the need to modify their existing parts. This is even more valid if one considers that in wood processing plants there are very often already detection stations present in which the entire surface of the wooden elements being processed is detected.

Consequently, thanks to the method according to the present invention it was possible to automate processing methods which until now were carried out manually, thus increasing the productivity of the plants and reducing their operating costs.

It should also be noticed that the present invention is relatively easy to produce and that even the cost linked to implementing the invention is not very high.

## Claims

1. A method for checking the positioning of a wooden element along a processing line comprising the operating steps of:
identifying, at a first detection station (6), the presence of at least one distinctive element (8) on the surface of the wooden element (1);
performing a first scan of the surface of the wooden element (1) at least at a first zone (9) comprising the distinctive element (8), obtaining at least a first image (10) corresponding to an area of the surface in which the distinctive element (8) is located;
identifying, with a predetermined first degree of precision, the position of the distinctive element (8) on the surface of the wooden element (1);
**characterized in that** it comprises also the steps of:
feeding the wooden element (1) along the processing line (4), checking its position with a second degree of precision which is lower than the first degree of precision;
at a second processing station (7) identifying the theoretical point where the distinctive element (8) should be located, based on the check carried out with the second degree of precision;
performing a second scan of the surface of the wooden element (1) at a second zone (13) of the surface comprising the theoretical point, obtaining a second image (14);
comparing the first image (10) with the second image (14) to identify the exact point where the distinctive element (8) is located and, consequently, at least implicitly, the position of the wooden element (1).

2. The method according to claim 1, **characterised in that** the first scanning step involves two-dimensional scanning of the first zone (9).

3. The method according to claim 1 or 2, **characterised in that** the first scanning step involves scanning of an entire face of the wooden element (1).

4. The method according to claim 1, 2 or 3, **characterised in that** the first scanning step involves scanning of the entire surface of the wooden element (1).

5. The method according to claim 3 or 4, **characterised in that** the step of identifying the position of the distinctive element (8) is carried out at least implicitly based on the result of the first scanning step.

6. The method according to any of the foregoing claims, **characterised in that** the step of identifying the distinctive element (8) involves identifying a defect of the surface of the wooden element (1).

7. The method according to any of the claims from 1 to 5, **characterised in that** the step of identifying the distinctive element (8) involves identifying a reference mark previously applied to the wooden element (1).

8. The method according to any of the foregoing claims, **characterised in that** the step of feeding the wooden element (1) is carried out with a second degree of precision which is at least one order of magnitude lower than the first degree of precision.

9. The method according to any of the foregoing claims, **characterised in that** the step of feeding the wooden element (1) is carried out using one or more conveyors (11) on which the wooden element (1) is placed.

10. The method according to any of the foregoing claims, **characterised in that** the second scanning step involves two-dimensional scanning of the second zone (13).

11. The method according to any of the foregoing claims, **characterised in that** the comparison step involves identifying the movement necessary to place the distinctive element (8) reproduced in the second image (14) over the distinctive element (8) reproduced in the first image (10).

12. The method according to claim 11, **characterised in that** said movement is identified as a translation in the plane formed by the first image and the second image (14).

13. The method according to claim 11 or 12, **characterised in that** the step of identifying the position of the wooden element (1) involves correcting the position identified with the second degree of precision based on the movement value calculated in the comparison step.

14. The method according to any of the foregoing claims, **characterised in that** the first image and the second image (14) are saved as digital images (10), (14).

15. The method according to claim 14, **characterised in that** the comparison step is carried out by comparing two numeric matrices corresponding respectively to the first image and the second image (14).

16. The method according to claim 14, **characterised in that** the comparison step is carried out by comparing two or more numeric submatrices of the numeric matrices corresponding respectively to the first image and the second image (14).

17. The method according to claim 15 or 16, **characterised in that** the step of comparing the two matrices is carried out by calculating the relative covariance matrix.

18. The method according to any of the foregoing claims, **characterised in that** the comparison step is carried out establishing a predetermined margin of error below which the correspondence between the distinctive element (8) shown in the first image (10) and that shown in the second image (14) may be considered to have been found.

19. A method for localised processing of wooden elements (1) comprising the operating steps of:
identifying a zone to be processed (15) on a wooden element (1) at an identification station;
moving the wooden element (1) to a processing station (7);
identifying the new position adopted by the zone to be processed (15);
performing localised processing on the zone to be processed (15);the method being **characterised in that** the step of identifying the position of the zone to be processed (15) at the processing station (7) is carried out by applying a method for checking the position of the wooden element (1) according to any of the foregoing claims.

20. The method for localised processing according to claim 19, **characterised in that** the step of identifying a distinctive element (8) involves identifying a distinctive element (8) associated with the zone to be processed (15).

21. The method for localised processing according to claim 20, **characterised in that** the step of identifying the distinctive element (8) is carried out by taking as the distinctive element (8) a defect of the wooden element (1) to be removed.

22. The method for localised processing according to claim 19, 20 or 21, **characterised in that** the processing step involves the operating steps of removing a part (16) of the wooden element (1) which comprises a defect, so as to remove the defect; substituting said removed part (16) with a block (18) having the same dimensions and which is free of defects.

23. The method for localised processing according to claim 22, **characterised in that** the removal step is carried out by routing or boring the wooden element (1).

24. The method for localised processing according to any of the claims from 19 to 23, **characterised in that** the processing step is automated.

25. The method for localised processing according to any of the claims from 19 to 24, **characterised in that** it is a method for finishing wooden beams.

26. The method for localised processing according to claim 25, **characterised in that** it is a method for finishing laminated wooden beams.

## Patentansprüche

1. Verfahren zur Überprüfung der Position eines Holzelementes entlang einer Fertigungslinie, enthaltend die folgenden Arbeitsschritte:
Erkennen des Vorhandenseins, an einer ersten Abtaststation (6), von wenigstens einem unterscheidenden Element (8) an der Oberfläche des Holzelementes (1);
Ausführen eines ersten Abtastens der Oberfläche des Holzelementes (1) in wenigstens einem ersten, das unterscheidende Element (8) enthaltenden Bereich (9), wobei wenigstens ein erstes Bild (10) erhalten wird, das dem Oberflächenbereich entspricht, in welchem sich das unterscheidende Element (8) befindet;
Erfassen der Position des unterscheidenden Elementes (8) an der Oberfläche des Holzelementes (1) mit einem vorgegebenen ersten Genauigkeitsgrad;
**dadurch gekennzeichnet, dass** es ebenfalls die folgenden Schritte enthält:
Zuführen des Holzelementes (1) entlang der Fertigungslinie (4), Überprüfen der Position desselben mit einem zweiten Genauigkeitsgrad, der niedriger ist als der erste Genauigkeitsgrad;
an einer zweiten Bearbeitungsstation (7) das Erkennen des theoretischen Punktes, an dem das unterscheidende Element (8) angeordnet sein könnte, basierend auf der mit dem zweiten Genauigkeitsgrad durchgeführten Überprüfung;
Ausführen eines zweiten Abtastens der Oberfläche des Holzelementes (1) in einem zweiten, den theoretischen Punkt enthaltenden Bereich (13) der Oberfläche, wobei ein zweites Bild (14) erhalten wird;
Vergleichen des ersten Bildes (10) mit dem zweiten Bild (14), um den genauen Punkt zu identifizieren, an dem das unterscheidende Element (8) angeordnet ist und folglich wenigstens implizit auch die Position des Holzelementes (1).

2. Verfahren nach Patentanspruch 1, **dadurch gekennzeichnet, dass** die erste Abtastphase das zweidimensionale Abtasten des ersten Bereiches (9) einbezieht.

3. Verfahren nach Patentanspruch 1 oder 2, **dadurch gekennzeichnet, dass** die erste Abtastphase das Abtasten einer ganzen Oberfläche des Holzelementes (1) einbezieht.

4. Verfahren nach Patentanspruch 1, 2 oder 3, **dadurch gekennzeichnet, dass** die erste Abtastphase das Abtasten der gesamten Oberfläche des Holzelementes (1) einbezieht.

5. Verfahren nach Patentanspruch 3 oder 4, **dadurch gekennzeichnet, dass** der Schritt zum Erkennen der Position des unterscheidenden Elementes (8) wenigstens implizit basierend auf dem Ergebnis der ersten Abtastphase ausgeführt wird.

6. Verfahren nach einem jeden der vorstehenden Patentansprüche, **dadurch gekennzeichnet, dass** der Schritt zum Erkennen des unterscheidenden Elementes (8) das Erkennen eines Fehlers an der Oberfläche des Holzelementes (1) einbezieht.

7. Verfahren nach einem jeden der Patentansprüche von 1 bis 5, **dadurch gekennzeichnet, dass** der Schritt zum Erkennen des unterscheidenden Elementes (8) das Erkennen eines Bezugmarkierung einbezieht, die vorher an dem Holzelement (1) angebracht wurde.

8. Verfahren nach einem jeden der vorstehenden Patentansprüche, **dadurch gekennzeichnet, dass** der Schritt zum Zuführen des Holzelementes (1) mit einem zweiten Genauigkeitsgrad ausgeführt wird, welcher wenigstens um eine Grössenordnung niedriger ist als der erste Genauigkeitsgrad.

9. Verfahren nach einem jeden der vorstehenden Patentansprüche, **dadurch gekennzeichnet, dass** der Schritt zum Zuführen des Holzelementes (1) ausgeführt wird, indem ein oder mehrere Förderer (11) benutzt werden, auf welchen das Holzelement (1) angeordnet ist.

10. Verfahren nach einem jeden der vorstehenden Patentansprüche, **dadurch gekennzeichnet, dass** die zweite Abtastphase das zweidimensionale Abtasten des zweiten Bereiches (13) einbezieht.

11. Verfahren nach einem jeden der vorstehenden Patentansprüche, **dadurch gekennzeichnet, dass** die Vergleichsphase das Erkennen der Bewegung einbezieht, die notwendig ist, um das unterscheidende Element (8), dargestellt in dem zweiten Bild (14), über dem unterscheidenden Element (8) anzuordnen, das in dem ersten Bild (10) dargestellt ist.

12. Verfahren nach Patentanspruch 11, **dadurch gekennzeichnet, dass** die genannte Bewegung als eine Verschiebung in der durch das erste Bild (10) und durch das zweite Bild (14) gebildeten Ebene erkannt wird.

13. Verfahren nach Patentanspruch 11 oder 12, **dadurch gekennzeichnet, dass** die Phase des Erkennens der Position des Holzelementes (1) die Korrektur der mit dem zweiten Genauigkeitsgrad idenfizierten Position einbezieht, basierend auf dem in der Vergleichsphase errechneten Bewegungswert.

14. Verfahren nach einem jeden der vorstehenden Patentansprüche, **dadurch gekennzeichnet, dass** das erste Bild und das zweite Bild (14) als digitale Bilder (10), (14) gespeichert werden.

15. Verfahren nach Patentanspruch 14, **dadurch gekennzeichnet, dass** die Vergleichphase durch den Vergleich von zwei numerischen Matrizen durchgeführt wird, die jeweils dem ersten Bild und dem zweiten Bild (14) entsprechen.

16. Verfahren nach Patentanspruch 14, **dadurch gekennzeichnet, dass** die Vergleichphase durch den Vergleich von zwei oder mehr numerischen Untermatrizen der numerischen Matrizen durchgeführt wird, die jeweils dem ersten Bild und dem zweiten Bild (14) entsprechen.

17. Verfahren nach Patentanspruch 15 oder 16, **dadurch gekennzeichnet**, das die Phase des Vergleichs der beiden Matrizen unter Berechnung der entsprechenden Kovarianzmatrix durchgeführt wird.

18. Verfahren nach einem jeden der vorstehenden Patentansprüche, **dadurch gekennzeichnet, dass** die Vergleichsphase durchgeführt wird durch Festlegung einer vorgegebenen Fehlertoleranz, unterhalb welcher die Übereinstimmung zwischen dem in dem ersten Bild (10) gezeigten unterscheidenden Element (8) und dem in dem zweiten Bild (14) gezeigten, als gefunden betrachtet werden kann.

19. Verfahren zur örtlich begrenzten Bearbeitung von Holzelementen (1), enthaltend die folgenden Arbeitsschritte:
Erkennen eines zu bearbeitenden Bereiches (15) an einem Holzelement (1) an einer Erkennungsstation;
Weiterleiten des Holzelementes (1) an eine Bearbeitungsstation (7);
Erkennen der neuen, von dem zu bearbeitenden Bereich (15) eingenommenen Position;
Ausführen der örtlich begrenzten Bearbeitung an dem zu bearbeitenden Bereich (15); wobei das Verfahren **dadurch gekennzeichnet ist, dass** die Phase des Erkennens der Position des zu bearbeitenden Bereiches (15) an der Bearbeitungsstation (7) durch die Anwendung eines Verfahrens zur Überprüfung der Position des Holzelementes (1) nach einem jeden der vorstehenden Patentansprüche ausgeführt wird.

20. Verfahren zur örtlich begrenzten Bearbeitung nach Patentanspruch 19, **dadurch gekennzeichnet, dass** die Phase des Erkennens eines unterscheidenden Elementes (8) auch das Erkennen eines unterscheidenden Elementes (8) einbezieht, das dem zu bearbeitenden Bereich (15) zugeordnet ist.

21. Verfahren zur örtlich begrenzten Bearbeitung nach Patentanspruch 20, **dadurch gekennzeichnet, dass** die Phase des Erkennens des unterscheidenden Elementes (8) ausgeführt wird, indem ein von dem Holzelement (1) zu entfernender Fehler als das unterscheidende Element (8) betrachtet wird.

22. Verfahren zur örtlich begrenzten Bearbeitung nach Patentanspruch 19, 20 oder 21, **dadurch gekennzeichnet, dass** die Bearbeitungsphase folgende Arbeitsschritte einbezieht:
Entfernen eines Teils (16) des Holzelementes (1), welcher einen Fehler enthält, sodass der Fehler entfernt wird;
Ersetzen des genannten entfernten Teils (16) durch ein Stück (18), welches die gleichen Abmessungen hat und
frei von Fehlern ist.

23. Verfahren zur örtlich begrenzten Bearbeitung nach Patentanspruch 22, **dadurch gekennzeichnet, dass** die Phase des Entfernens durch Ausfräsen oder Ausbohren des Holzelementes (1) ausgeführt wird.

24. Verfahren zur örtlich begrenzten Bearbeitung nach einem jeden der Patentansprüche von 19 bis 23, **dadurch gekennzeichnet, dass** die Bearbeitungsphase automatisch erfolgt.

25. Verfahren zur örtlich begrenzten Bearbeitung nach einem jeden der Patentansprüche von 19 bis 24, **dadurch gekennzeichnet, dass** es ein Verfahren zur Fertigstellung von Holzträgern ist.

26. Verfahren zur örtlich begrenzten Bearbeitung nach Patentanspruch 25, **dadurch gekennzeichnet, dass** es ein Verfahren zur Fertigstellung von hölzernen Verbundträgern ist.

## Revendications

1. Une méthode de vérification de la position d'un élément en bois le long d'une ligne de traitement comprenant les phases opérationnelles consistant à :
identifier, au niveau d'une première station de détection (6), la présence d'au moins un élément distinctif (8) sur la surface de l'élément en bois (1) ;
effectuer un premier balayage de la surface de l'élément en bois (1) au moins au niveau d'une première zone (9) comprenant l'élément distinctif (8), obtenant au moins une première image (10) correspondant à une portion de la surface où se trouve ledit élément distinctif (8) ;
identifier, avec un premier degré de précision prédéfini, la position de l'élément distinctif (8) sur la surface de l'élément en bois (1) ;
**caractérisée en ce qu'**elle comprend aussi les phases consistant à :
faire avancer l'élément en bois (1) le long de la ligne de traitement (4), en vérifiant sa position avec un deuxième degré de précision qui est inférieur au premier degré de précision ;
au niveau d'une deuxième station de traitement (7), identifier le point théorique où devrait se trouver l'élément distinctif (8), sur la base de la vérification effectuée avec le deuxième degré de précision ;
effectuer un deuxième balayage de la surface de l'élément en bois (1) au niveau d'une deuxième zone (13) de la surface comprenant le point théorique, obtenant une deuxième image (14) ;
comparer la première image (10) avec la deuxième image (14) pour identifier le point exact où se trouve l'élément distinctif (8) et, par conséquent, au moins implicitement, la position de l'élément en bois (1).

2. La méthode selon la revendication 1, **caractérisée en ce que** la première phase de balayage prévoit le balayage bidimensionnel de la première zone (9).

3. La méthode selon la revendication 1 ou 2, **caractérisée en ce que** la première phase de balayage prévoit le balayage de toute une face de l'élément en bois (1).

4. La méthode selon la revendication 1, 2 ou 3, **caractérisée en ce que** la première phase de balayage prévoit le balayage de toute la surface de l'élément en bois (1).

5. La méthode selon la revendication 3 ou 4, **caractérisée en ce que** la phase d'identification de la position de l'élément distinctif (8) est effectuée, au moins implicitement, sur la base du résultat de la première phase de balayage.

6. La méthode selon l'une quelconque des revendications précédentes, **caractérisée en ce que** la phase d'identification de l'élément distinctif (8) prévoit l'identification d'un défaut de la surface de l'élément en bois (1).

7. La méthode selon l'une quelconque des revendications de 1 à 5, **caractérisée en ce que** la phase d'identification de l'élément distinctif (8) prévoit l'identification d'un repère de référence préalablement appliqué sur l'élément en bois (1).

8. La méthode selon l'une quelconque des revendications précédentes, **caractérisée en ce que** la phase d'avance de l'élément en bois (1) est effectuée avec un deuxième degré de précision qui est inférieur d'au moins un ordre de grandeur au premier degré de précision.

9. La méthode selon l'une quelconque des revendications précédentes, **caractérisée en ce que** la phase d'avance de l'élément en bois (1) est effectuée en utilisant un ou plusieurs transporteurs (11) sur lequel/lesquels est placé l'élément en bois (1).

10. La méthode selon l'une quelconque des revendications précédentes, **caractérisée en ce que** la deuxième phase de balayage prévoit le balayage bidimensionnel de la deuxième zone (13).

11. La méthode selon l'une quelconque des revendications précédentes, **caractérisée en ce que** la phase de comparaison prévoit l'identification du déplacement nécessaire pour placer l'élément distinctif (8) reproduit dans la deuxième image (14) sur l'élément distinctif (8) reproduit dans la première image (10).

12. La méthode selon la revendication 11, **caractérisée en ce que** ledit déplacement est identifié comme une translation dans le plan défini par la première image et la deuxième image (14).

13. La méthode selon la revendication 11 ou 12, **caractérisée en ce que** la phase d'identification de la position de l'élément en bois (1) prévoit la correction de la position identifiée avec le deuxième degré de précision sur la base de la valeur de déplacement calculée dans la phase de comparaison.

14. La méthode selon l'une quelconque des revendications précédentes, **caractérisée en ce que** la première image et la deuxième image (14) sont enregistrées comme images numériques (10), (14).

15. La méthode selon la revendication 14, **caractérisée en ce que** la phase de comparaison est effectuée en comparant deux matrices numériques correspondant respectivement à la première image et à la deuxième image (14).

16. La méthode selon la revendication 14, **caractérisée en ce que** la phase de comparaison est effectuée en comparant deux, ou plus, sous-matrices numériques des matrices numériques correspondant respectivement à la première image et à la deuxième image (14).

17. La méthode selon la revendication 15 ou 16, **caractérisée en ce que** la phase de comparaison des deux matrices est effectuée en calculant la matrice de covariance correspondante.

18. La méthode selon l'une quelconque des revendications précédentes, **caractérisée en ce que** la phase de comparaison est effectuée en fixant une marge d'erreur prédéfinie en dessous de laquelle la correspondance entre l'élément distinctif (8) montré dans la première image (10) et l'élément distinctif montré dans la deuxième image (14) peut être considérée comme ayant été trouvée.

19. Une méthode pour le traitement localisé d'éléments en bois (1) comprenant les phases opérationnelles consistant à :
identifier une zone à traiter (15) sur un élément en bois (1) au niveau d'une station d'identification ;
acheminer l'élément en bois (1) vers une station de traitement (7) ;
identifier la nouvelle position prise par la zone à traiter (15) ;
effectuer un traitement localisé sur la zone à traiter (15) ;
la méthode étant **caractérisée en ce que** la phase d'identification de la position de la zone à traiter (15) au niveau de la station de traitement (7) est effectuée en appliquant une méthode de vérification de la position de l'élément en bois (1) selon l'une quelconque des revendications précédentes.

20. La méthode pour le traitement localisé selon la revendication 19, **caractérisée en ce que** la phase d'identification d'un élément distinctif (8) prévoit l'identification d'un élément distinctif (8) associé à la zone à traiter (15).

21. La méthode pour le traitement localisé selon la revendication 20, **caractérisée en ce que** la phase d'identification de l'élément distinctif (8) est effectuée en considérant comme élément distinctif (8) un défaut à supprimer de l'élément en bois (1).

22. La méthode pour le traitement localisé selon la revendication 19, 20 ou 21, **caractérisée en ce que** la phase de traitement prévoit les phases opérationnelles consistant à :
enlever une partie (16) de l'élément en bois (1) qui comprend un défaut, de manière à supprimer ledit défaut ;
remplacer ladite partie enlevée (16) par un bloc (18) ayant les mêmes dimensions et dépourvu de défauts.

23. La méthode pour le traitement localisé selon la revendication 22, **caractérisée en ce que** la phase de suppression est effectuée par fraisage ou perçage de l'élément en bois (1).

24. La méthode pour le traitement localisé selon l'une quelconque des revendications de 19 à 23, **caractérisée en ce que** la phase de traitement est automatisée.

25. La méthode pour le traitement localisé selon l'une quelconque des revendications de 19 à 24, **caractérisée en ce qu'**il s'agit d'une méthode pour la finition de poutres en bois.

26. La méthode pour le traitement localisé selon la revendication 25, **caractérisée en ce qu'**il s'agit d'une méthode pour la finition de poutres en bois lamellé.
